(19) Europäisches Patentamt / European Patent Office / Office européen des brevets

(11) EP 2 256 991 A1

(12) EUROPEAN PATENT APPLICATION

(43) Date of publication:
01.12.2010 Bulletin 2010/48

(51) Int Cl.:
H04L 12/26 (2006.01)    H04L 1/18 (2006.01)

(21) Application number: 09290381.4

(22) Date of filing: 25.05.2009

(84) Designated Contracting States:
AT BE BG CH CY CZ DE DK EE ES FI FR GB GR HR HU IE IS IT LI LT LU LV MC MK MT NL NO PL PT RO SE SI SK TR
Designated Extension States:
AL BA RS

(71) Applicant: Canon Kabushiki Kaisha
Ohta-ku
Tokyo (JP)

(72) Inventors:
• Le Floch, Hervé
35000 Rennes (FR)
• Nassor, Eric
35235 Thorigne Fouillard (FR)

(74) Representative: Imbert de Tremiolles, Ghislain
Groupement de mandataires n°89
Santarelli
14 Avenue de la Grande Armée
75017 PARIS (FR)

(54) **Method and device for determining types of packet loss in a communication network**

(57) A method and device for determining types of packet loss for adapting a level of redundancy in the transmission of a plurality of packets from a server to a client device in a communication network is disclosed. After having detected two consecutive lost packets (402) during the transmission of a subset of packets, a distance between the two consecutive lost packets is obtained (406) and a threshold on the basis of a packet loss probability density function is computed (416). The distance and the threshold are then compared (420) to characterize the loss type of the last lost packet of said two consecutive lost packets. The level of redundancy in the transmission of the plurality of packets is adapted according to the loss type of the last lost packet.

FIG. 4

**Description**

The present invention relates generally to method and device for exchanging data over a communication network and more specifically to a method and a device for determining types of packet loss in a communication network so as to adapt communication parameters accordingly.

The losses of information that arise during the transfer of data over a communication network may give rise to significant effects in the processing of data on the receiver side. Errors in the transmission of multimedia data may, for example, give rise to strong visual distortions in the presentation of the multimedia content transmitted.

Since data are generally transmitted over communication networks in the form of data packets such as IP (Internet Protocol) packets, the loss of information means the loss of data packets.

The loss of data packets may have different origins. In particular, it can be linked to the communication network components. For example, if the input data rate of a router exceeds its output data rate, data packets are lost. Such data packet losses are referred to as congestion losses and they generally occur in burst.

Data packet losses may also be related to external factors such as interference in a wireless link of a communication network. If these losses occur independently, they are referred to as isolated losses.

Different algorithms are used in response to data packet losses. Generally, the choice of the algorithm depends upon the nature of the losses or at least upon the main cause of the losses. For example, the transmitter data rate can be reduced to handle congestion losses while error correcting codes (ECC) such as forward error correction (FEC) are particularly adapted to handling wireless losses. It may be noted that FEC packets are coupled with common data packets for transmitting redundant data so that the receiver can reconstruct the lost data packets.

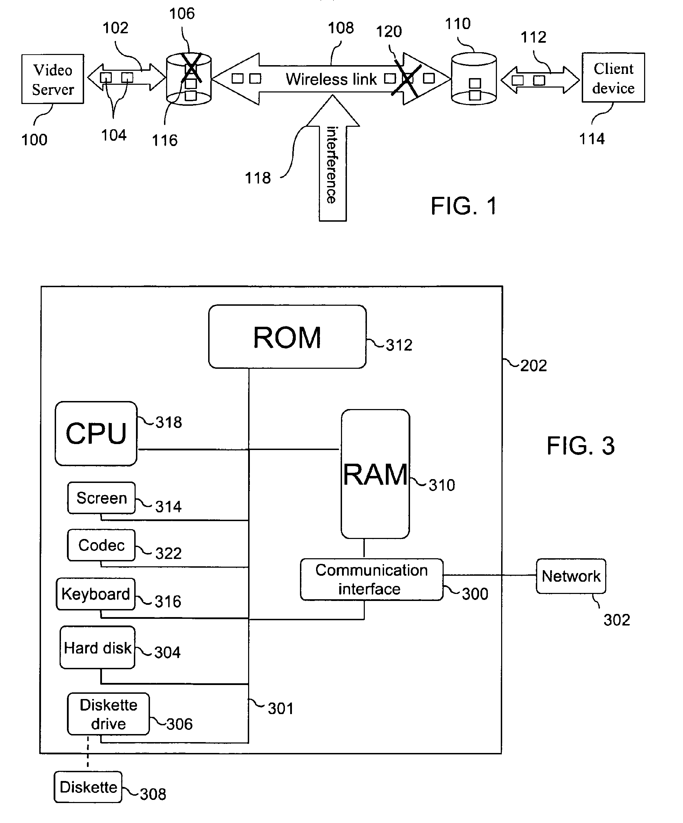

**Figure 1** shows a communication network environment for transmitting video data from a video server to a client device.

As illustrated, the video server 100 sends a data stream, for example as IP/RTP (Real-time Transport Protocol) packets 104, over a first sub-network 102. Sub-network 102, here a wired network, is connected to the router 106 comprising a queue for storing received data packets before resending them through the second communication sub-network 108, here a wireless network that can be subject to interference such as micro-waves.

The sub-network 108 is also connected to the router 110 that is linked to the third sub-network 112, for example a wired network, to which the client device 114 is connected.

If the input data rate of the router 106 is greater than its output data rate, that is to say if the capacity of the second sub-network 108 is lower than that of the first sub-network 102, or if several links are connected to the router 106, the queue of the router 106 fills faster than it empties. Consequently, data packets are lost as shown by reference 116. As mentioned above, such losses are called congestion errors.

Furthermore, it should be observed that due to the high occupancy level of the queue in the router, the transfer duration of the packet increases. Therefore, in case of congestion, the global transmission time of a data packet between the video server and the client device, also called ROTT (Relative One way Trip Time), increases.

Similarly, the wireless sub-network 108 can be subject to interference 118 that leads to data packet losses as shown by reference 120.

In the paper entitled "End-to-end differentiation of congestion and wireless loss", IEEE/ACM Transactions on Networking, Volume 11, Issue 5, Oct. 2003, pages 703-717, the authors explore end-to-end loss differentiation algorithms for use with congestion-sensitive video transport protocols for networks with either backbone or last-hop wireless links. As disclosed, according to the Biaz scheme, packet inter-arrival time is used to differentiate between loss types. The time $T_i$ between the arrivals of packets $P_i$ and $P_{i+n+1}$, where $P_i$ denotes the last in-sequence packet received by the receiver before a loss occurred and $P_{i+n+1}$ denotes the first out-of-order packet received after the loss, n being the number of packets lost, is compared to $(n+1)T_{min}$ and $(n+2)T_{min}$ where $T_{min}$ denotes the minimum packet inter-arrival time observed so far by the receiver. If the time $T_i$ is comprised between $(n+1)T_{min}$ and $(n+2)T_{min}$, the losses are wireless losses. If the time $T_i$ is outside, the losses are congestion losses. The range $[(n+1)T_{min}, (n+2)T_{min}]$ may be optimized. The differentiation of losses is then used to adapt the transmission rate when congestion losses are detected.

Even if the results disclosed in this paper seem to improve the overall data transfer rate, there is a need to provide a method and a device for taking into account not only the nature of the sub-networks that are at the origin of the losses but also the nature of the losses by themselves. In particular, there is a need to improve the overall data transfer rate by considering the type of losses and hence their frequencies.

Thus, it is a broad object of the invention to remedy the shortcomings of the prior art as described here above.

It is another object of the present invention to provide a method for determining types of packet loss in a communication network, the method comprising the following steps,

- detecting loss of packets while transmitting a subset of packets of said plurality of packets;
- for at least two consecutive lost packets of said subset of packets,

○ obtaining a distance between said two consecutive lost packets;

o computing a threshold on the basis of a packet loss probability density function, wherein the packet loss probability density function describes a probability density in terms of distance between consecutive lost packets;

o determining a loss type of the last lost packet of said two consecutive lost packets, the loss of said last lost packet being of a first type if the obtained distance is greater than the computed threshold and of a second type if said distance is lower than said threshold.

According to a preferred embodiment, the method further comprises a step of adapting a level of redundancy to be transmitted according to the loss type of said last lost packet.

By determining the loss type of the lost packets according to the distance between consecutive lost packets, it is possible to quickly derive the nature of these losses and thus to improve data transmission between a server and a client device by adapting the level of redundancy accordingly.

According to a preferred embodiment, losses of the first type represent isolated losses and losses of the second type represent burst losses. The method further comprising a step of determining at least one characteristic representing a burst period characterized by a set of contiguous packet losses of burst type, said level of redundancy being adapted according to at least said burst period

By identifying losses of the burst type and losses of the isolated type it is thus possible to adapt the level of redundancy to situations where congestions occur and to situations where no congestions occur but where isolated packet losses are still present.

Still according to a preferred embodiment, the method further comprises the step of determining said packet loss probability density function so that the method is adapted to real packet transmission conditions. Advantageously, said packet loss probability density function is based upon a kernel interpolation method.

Still according to a preferred embodiment, said step of computing said threshold comprises the steps of determining the first and second extrema of the curve representing said packet loss probability density function, said threshold being a function of said extrema. Such a threshold allows the nature of the losses to be taken into account.

In a preferred embodiment, said step of computing said threshold comprises the steps of :

- determining the first maximum $y_1 = pdf(x_1)$ of the curve $y = pdf(x)$ representing said packet loss probability density function;
- determining the first minimum $y_2 = pdf(x_2)$ of the curve $y = pdf(x)$;

- determining the maximum of the absolute value of the derivative ($|pdf'(x)|$) in the interval $[x_1,x_2]$; and
- computing the threshold as corresponding to the closest point of $x_2$ in the interval $[x_1,x_2]$ that verifies

$$pdf'(d) = \frac{1}{h} pdf'(x_{max})$$ wherein h is a predetermined parameter.

It is thus provided a method that allows to compute the threshold for discriminating between the two types of losses which can be tuned adequately setting the parameter h.

In a preferred embodiment, the method further comprises a step of filtering said packet loss probability density function with a low frequency filter to smooth the curve representing the packet loss probability density function.

Advantageously, the method further comprises a step of transmitting a plurality of packets from a server to a client in the communication network including the adapted level of redundancy so that the client can recover adequately from packet losses.

Still in a preferred embodiment, said step of detecting packet loss comprises a step of analyzing a sequence number associated with each received packet, said value being expressed in terms of sequence number difference, to simplify the implementation of the invention.

It is another object of the invention to provide a computer program comprising instructions for carrying out each step of the method described above when the program is loaded and executed by a programmable apparatus.

It is still another object of the invention to provide an information storage means readable by a computer or a microprocessor storing instructions of a computer program that makes it possible to implement a method for determining types of packet loss in a communication network according to the method described above.

It is a particular object of the invention to provide a device for determining types of packet loss in a communication network, the device comprising the following means,

- means for detecting loss of packets while transmitting a subset of packets of said plurality of packets;
- means for obtaining a distance between two consecutive lost packets of said subset of packets;
- means for computing a threshold on the basis of a packet loss probability density function, wherein the packet loss probability density function describes a probability density in terms of distance between consecutive lost packets;
- means for determining a loss type of the last lost packet of said two consecutive lost packets, the loss of said last lost packet being of a first type if the obtained distance is greater than the computed threshold and of a second type if said distance is lower than said threshold.

By determining the loss type of the lost packets according to the distance between consecutive lost packets, it is possible to quickly derive the nature of these losses and thus to improve data transmission between a server and a client device by adapting the level of redundancy accordingly.

According to a preferred embodiment, the device further comprising means for adapting a level of redundancy to be transmitted according to the loss type of said last lost packet.

Still according to a preferred embodiment, losses of the first type represent isolated losses and losses of the second type represent burst losses. The device further comprises means for determining at least one characteristic representing a burst period characterized by a set of contiguous packet losses of burst type, said level of redundancy being adapted according to at least said burst period.

By identifying losses of the burst type and losses of the isolated type it is thus possible to adapt the level of redundancy to situations where congestions occur and to situations where no congestions occur but where isolated packet losses are still present.

Therefore, by determining trends of types of packet losses, the transmission rate of the server and the level of redundancy may further be improved.

Advantageously, the device further comprises means for determining said packet loss probability density function so that the device is adapted to handle real packet transmission conditions.

According to a preferred embodiment, the device further comprises means for filtering said packet loss probability density function with a low frequency filter to smooth the curve representing said packet loss probability density function.

Further advantages of the present invention will become apparent to the ones skilled in the art upon examination of the drawings and detailed description. It is intended that any additional advantages be incorporated herein.

Figure 1 depicts a communication network environment for transmitting video data from a video server to a client device.

Figure 2 illustrates the logic architecture of a data server and a client device that can be used for transmitting and receiving, respectively, a coded data stream over a communication network, enabling the differentiation between isolated packet losses and packet losses in a burst and hence the optimization of FEC parameters.

Figure 3 illustrates the hardware architecture of a client device adapted to implement a method of processing a coded data stream according to the invention.

Figure 4 depicts the algorithms implemented in the packet loss detector and the packet error analyzer of Figure 2.

Figure 5 illustrates schematically how lost packets are identified and how the distances between consecutive lost packets are computed.

Figure 6 illustrates an example of representation of a probability density function.

Figures 7 and 8 illustrate how a threshold $d$ can be computed from density of loss probabilities for differentiating isolated packet losses from packet losses in a burst.

Figure 9 illustrates how the algorithm described with reference to Figures 7 and 8 for computing a threshold $d$ differentiating packet losses in a burst from isolated packet losses can be used to improve data transfer over a communication network.

According to the invention there is provided a method and a device for adapting the FEC parameters according to the frequencies of packet losses so as to determine the adequate level of redundancy. It is to be recalled here that, if the redundancy is too great, most of the FEC packets are useless and the communication network bandwidth is used inefficiently and that, alternatively, if the FEC packets proportion is too low, it is not possible for the receiver to reconstruct lost data.

According to the invention, the main criterion used to differentiate the losses, and therefore to adapt the FEC parameters, is based upon the distances representing the number of data packets received between two consecutive lost packets. The distance between the current lost packet and the previous lost packet is associated with each lost packet. Based on such distance, a packet loss is said to be of the isolated type when the associated distance is high and of the burst type when the associated distance is low. Burst periods represent periods during which several packets are lost, the associated distances being low.

Isolated losses can be easily handled using a low level of redundancy while losses in a burst are more difficult to deal with and require a higher level of redundancy that should advantageously match the shape of the curve representing losses in a burst. Therefore, it is required to determine a threshold so as to distinguish isolated packet losses from packet losses in a burst based on their associated distances. Such threshold is particularly important to identify precisely the burst periods for increasing rapidly the level of redundancy at the beginning of burst periods and determining accurately the shape of the curve representing a burst of losses.

This differentiation between isolated packet losses and packet losses in a burst can be done either on the server side or on the client side. For the sake of illustration, this differentiation is done, here, on the client side.

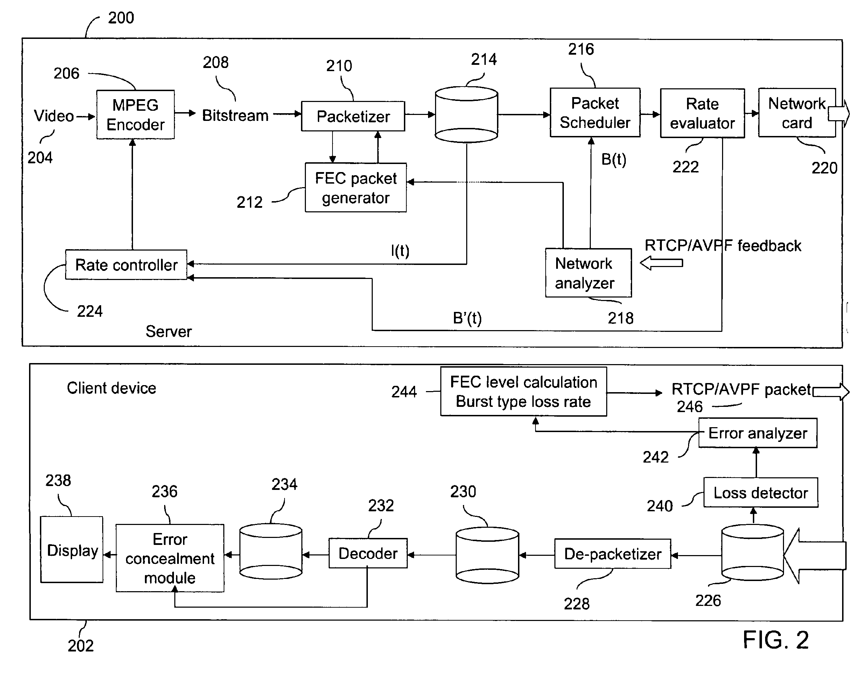

Figure 2 illustrates the logic architecture of a data server 200 and a client device 202 that can be used for transmitting and receiving, respectively, a coded data stream over a communication network, enabling the differentiation between isolated packet losses and packet losses in a burst and the optimization of FEC parameters. The client device 202 is, for example, a computer, a laptop, a personal digital assistant, a mobile phone or a multimedia reader.

The data stream 204 to be transmitted is, in this example, a video stream that is encoded and sent by the server 200 over a packet-switched communication network (not represented). When received by the client device 202, the video stream is decoded and displayed.

The protocol used for exchanging data over the communication network is, for example, the RTP (Real-time Transport Protocol).

The video stream 204 is encoded in a standard way, for example using the MPEG (Moving Picture Experts Group) encoder 206 to obtain the bit stream 208.

Naturally, the coded bit stream could represent other types of data such as audio data.

Bit stream 208 is entered in the packetizer 210 where it is converted in data packets. Additionally, FEC packets are generated from the data packets. The FEC data can be generated using a Reed Solomon algorithm or an XOR algorithm before being encapsulated as common RTP packets. The RFC-2733 document may be taken as an example for FEC packet generation. The data and FEC packets are then stored in the memory buffer 214.

Each packet comprises two parts. The first one corresponds to the header, for example an RTP header, which contains data used for routing as well as controlling data. In particular, the network header comprises a packet index, or sequence number, representing the index of the packet according to the sending order. The second part corresponds to the useful data of the packet, also called payload, that is to say the data representing the coded data stream.

The packet scheduler 216 adapts the transmission rate of the packets according to a target bandwidth given by the network analyzer 218.

The network analyzer 218 analyzes network packets sent back by the client device as RTCP/AVPF (Real-time Transport Control Protocol / extended Audio Video Profile for RTCP Feedback) packets. For example, the congestion loss rate can be sent by the client device through RTCP packets and used by the network analyser 218 to adjust the transmission rate accordingly. The network analyzer 218 uses the received data to compute a transmission rate and/or estimate the bandwidth $B(t)$ of the communication network. If the number of lost packets due to a congestion event is high, the transmission rate is decreased. The transmission rate or the bandwidth $B(t)$ is transmitted to the packet scheduler 216 that uses it for sending the RTP packets.

Therefore, the control of the network congestion is provided by adapting the transmission rate of the packets according to the network analysis that enables efficient adaptation of the throughput of the packets to the communication network and thus, to use the bandwidth of the communication network efficiently by reducing the risk of congestion.

The network card 220 is used to transmit packets over the communication network. The network card 220 comprises advantageously a network adapter so as to format the packets according to the network specifications. For example, in the case of an IP network, the packets are adapted according to UDP (User Datagram Protocol) and IP packet format.

The network analyzer 218 is also used to transmit information regarding FEC redundancy, received in the RTCP/AVPF packets, to the FEC packet generator 212.

The compression rate of the encoder 206 is controlled by the transmission rate controller 224 according to the measured transmission rate $B'(t)$ of the sent packets and fullness level of the memory buffer 214. The transmission rate $B'(t)$ of the packets is determined in the transmission rate evaluator 222 that monitors the transmission rate of the network packets to the network card 220. Therefore, the compression ratio is adapted to a new transmission rate if the network card transmits packets to the communication network at a lower transmission rate due to a sudden limitation of the available bandwidth.

It should be noted here that, when the value of the available bandwidth is constant, the estimated bandwidth value $B(t)$ is similar to the measured bandwidth $B'(t)$.

The client device 202 receives packets from the communication network via the first memory buffer 226. Received packets are de-packetized in de-packetizer 228 wherein headers are removed and payloads are reassembled to form a bit stream that is stored in the second memory buffer 230. The stored bit stream is then decoded in decoder 232 to obtain images that are stored in the third memory buffer 234.

If packets are lost, that it is to say if sequence numbers of received packets are not continuous, and if the redundancy level is not sufficient to retrieve the missing data, the error concealment module 236 is used.

Error concealment module 236 can be based upon interpolation algorithms adapted, for example, to perform a spatial interpolation when the image is of INTRA type and a temporal interpolation when the image is of INTER type. Once the error concealment methods have been applied to an image, it is displayed on display 238.

Simultaneously, a loss detector 240 analyzes the packets stored in the first memory buffer 226 to detect losses of packets. As mentioned above, losses of packets can be detected by checking packet sequence numbers. When a packet loss is detected, the error analyser 242 is used for identifying the type of loss, in particular if the loss is of the burst type or of the isolated type.

Therefore, each lost packet is qualified as an isolated loss packet or as a burst type loss packet.

If a new packet loss is detected as a burst type loss then the client device sends a feedback message to the server to tell it that a burst period has begun. As a consequence, the server will increase the FEC redundancy.

More precisely, losses are analyzed in error analyzer 242 to be characterized. Such characterization of the lost packets is used by the module 244 that stores the sequence numbers of the previous lost packets and defines from these lost packets which ones are due to a burst event. This module can therefore extract the burst period statistics such as lengths, frequencies and average loss rates. These statistics are transmitted as RTCP/ AVPF packets 246 that are used by the server for calculating the adequate FEC redundancy.

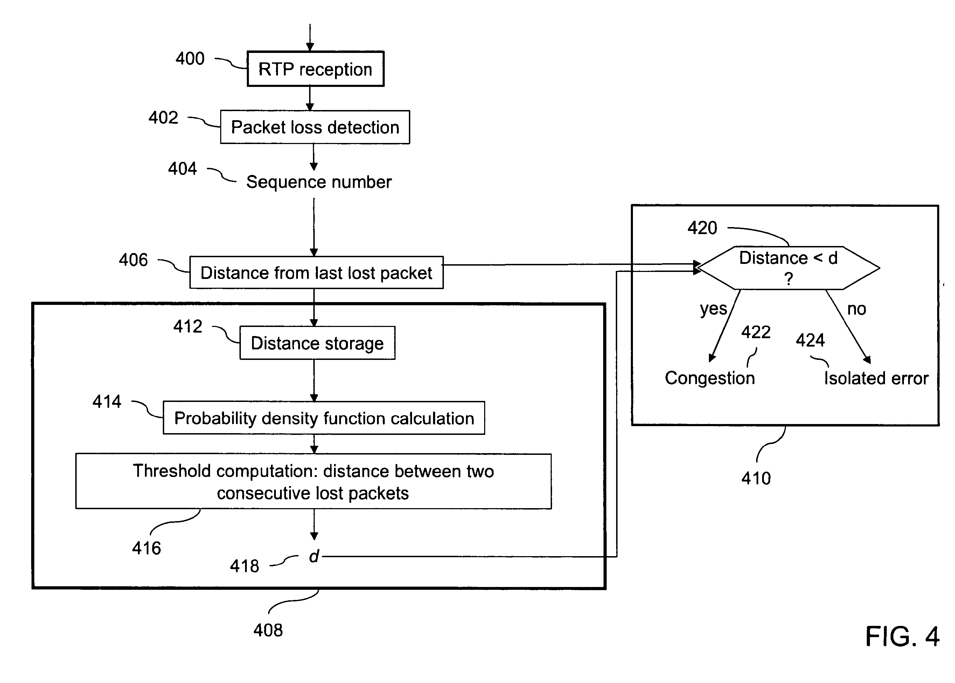

Loss detector 240 and error analyzer 242 are described in detail with reference to Figure 4.

**Figure 3** illustrates the hardware architecture of a client device 202 adapted to implement a method of processing a coded data stream according to the invention. As mentioned above, the client device 202 is, for example, a computer, a laptop, a personal digital assistant, a mobile phone or a multimedia reader.

The device 202 comprises the communication interface 300, connected to the communication network 302, adapted to receive digital data to be processed according to the invention. The network 302 can be a wired or a wireless network. The device 202 also comprises the storage means 304 such as a hard disk. It also comprises a disk drive 306 for reading data from and/or writing data on a disk 308. The disk 308 may be a diskette, a CD-ROM, a DVD-ROM, a memory card, a USB peripheral, or the like. The disk 308, like the hard disk 304, can contain data processed according to the invention as well as the program or programs implementing the invention which, once read by the device 202, can be stored on the hard disk 304 or in the random access memory 310, also called RAM. As a variant, the program or programs enabling the device to implement the invention can be stored in read only memory 312, also called ROM. In a second variant, the program or programs may be received in order to be stored in an identical fashion to that described previously via the communication network 302.

The device 202 further comprises, advantageously, a screen 314 for displaying the processed data or serving as an interface with the user who can thus select other data to be processed using the keyboard 316 or any other means such as a mouse, a trackball, or a stylus.

The central processing unit 318, referred to as CPU, executes the instructions relating to the implementation of the invention, which are stored in the read only memory 312 or in the other storage means. For example, the central processing unit carries out the steps illustrated in Figure 4 and described hereinafter. On powering up, the processing programs stored in a non-volatile memory, for example the ROM 312, are transferred into the random access memory 310 which then contains the executable code of the invention as well as registers for storing the variables necessary for implementing the invention.

In more general terms, an information storage means, which can be read by a computer or microprocessor, integrated or not into the device, and which may possibly be partially or totally removable, stores a program implementing the data processing method according to the invention.

The central processing unit 318 further comprises means for processing a coded data stream adapted to implement the method of data processing in accordance with the invention as described below.

In particular, the central processing unit 318 comprises means for estimating an importance criterion, means for requesting retransmission, means for estimating an image area, means for estimating the number of items of data contained in a lost packet, means for estimating, measuring and predicting a complexity, means for estimating the number of image blocks corresponding to a packet, means for measuring the variance, means for estimating the image type and means for measuring the number of packets corresponding to an image.

The communication bus 310 affords communication between the different elements included in the device 202 or connected to it. The representation of the bus 301 is non-limiting and, in particular, the central processing unit 318 unit may communicate instructions to any element of the device 202 directly or by means of another element of the device 202.

The device 202 further comprises a codec 322, for example in the form of a standard chip, used by the central processing unit 318 in a conventional manner via the bus 301.

**Figure 4** depicts the algorithms implemented in the loss detector 240 and the error analyzer 242 of Figure 2.

As shown, after packets have been received (step 400), the lost packets are detected (step 402) according to the sequence number of the received packets and their sequence number 404 is determined. To that end, once a packet is received, its sequence number is stored to detect missing values in the sequence of sequence numbers.

For example, when packets having sequence numbers $n$, $n+1$, $n+2$, $n+4$ are received, these sequence numbers are stored and analyzed. Since the packet having sequence number $n+3$ is missing in the sequence n, $n+1$, $n+2$, $n+4$, it is determined that packet having sequence number $n+3$ has not been received and so has been lost.

The sequence numbers of the lost packets are stored to be used for calculating the distance, in terms of difference of sequence numbers, between the current lost packet and the previous one (step 406).

At this stage, a two part algorithm is used to classify the losses of packets. The first part, referenced 408, can be seen as a learning module while the second part, referenced 410, is a loss detector enabling the characterization of each loss, either as burst type loss or as an isolated loss.

After the distance between two consecutive lost packets has been evaluated (step 406), it is stored (step 412) in association with the sequence number of the current lost pocket. The sequence number of the current lost packet is also stored in place of the one of the previous lost packet.

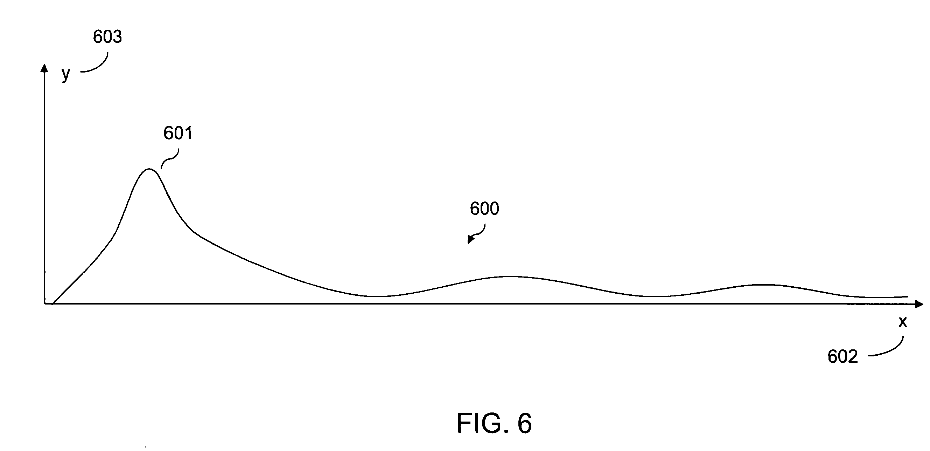

A probability density function is then computed based on the stored distances between lost packets (step 414). This probability density represents, as a function of distance, the ratio of packets that have been lost at that distance from the last lost packet over the total number of recorded lost packets. An example of computing such density of probabilities is described by reference to Figure 6.

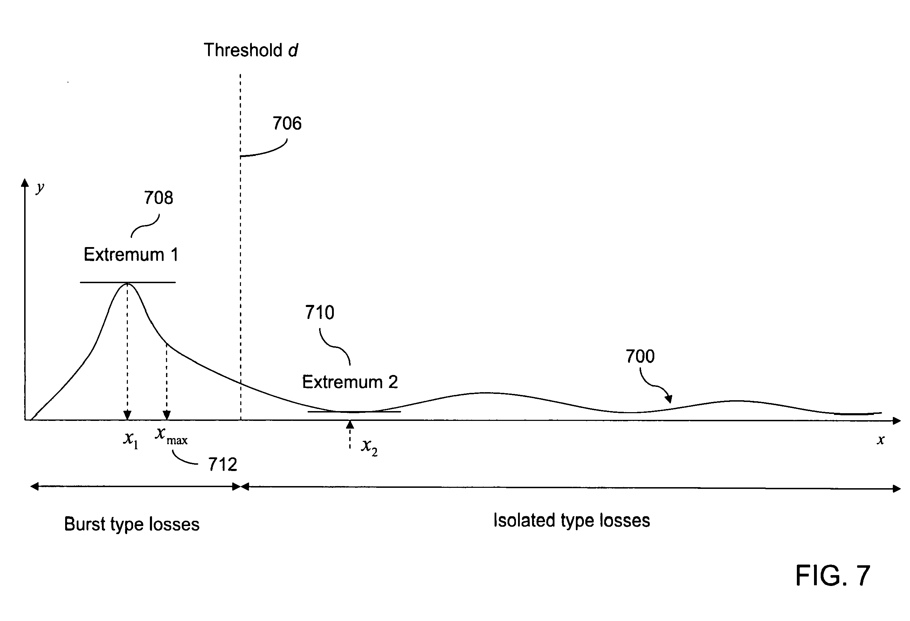

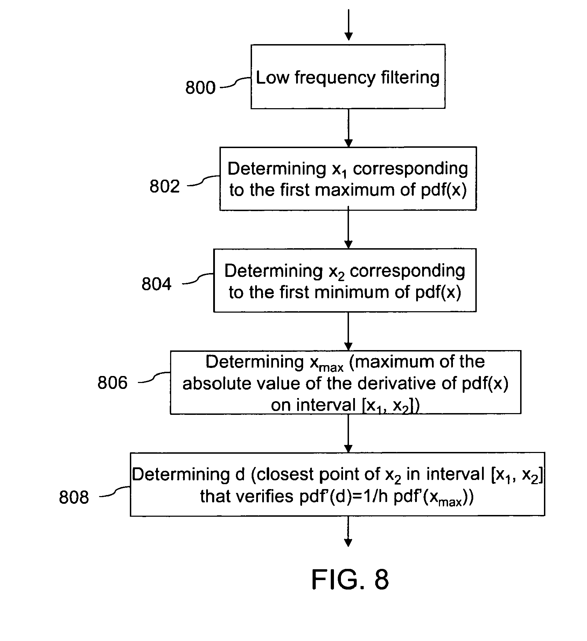

Thereafter, the density of probabilities is used to compute a threshold $d$ (step 416), referenced 418. The computation of the threshold $d$ is described by reference to Figures 7 and 8.

The computation of the probability density (step 414) and the computation of the threshold $d$ (step 416) can be done for each new detected lost packet or at a given time, depending upon the available resources of the client device.

The distance between the current lost packet and the previous one as well as the threshold $d$ are transmitted to the loss detector algorithm part 410. For each lost packet, the distance from the previous lost packet is compared with the threshold $d$ (step 420). If the distance is higher than threshold $d$, the current lost packet is considered as an isolated lost packet, as indicated with reference 424. Otherwise, if the distance is lower than threshold d, the current lost packet is considered as a burst type lost packet, that is to say a loss related to a congestion problem, as indicated with reference 422. In this latter case, the client device advantageously sends information to the server for indicating a burst period start.

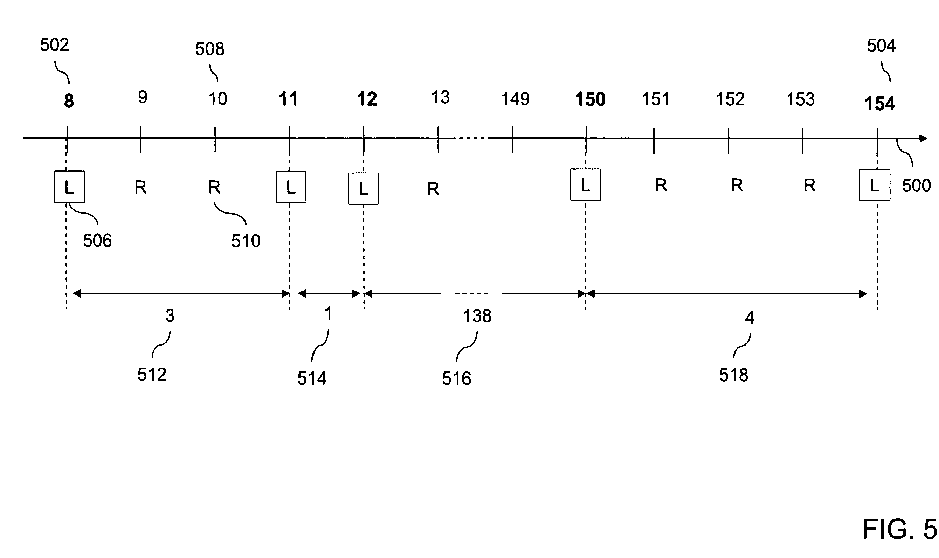

**Figure 5** depicts schematically how lost packets are identified and how the distances between consecutive lost packets are computed. Timeline 500 represents the sequence numbers of packets transmitted by the server that is to say of packets that should be received by the client device. For the sake of illustration, only the packets having a sequence number comprised between 8 and 154 (references 502 and 504 in the drawing) are considered here.

Below each packet sequence number a letter indicates the status of the corresponding packet: L stands for lost packet while R stands for received packet. As described above, lost packets are identified by analyzing the sequence number of received packets and by determining missing sequence numbers. For example, the packet having sequence number 8, referenced 502, has been lost and is marked L (reference 506) while the packet having sequence number 10, referenced 508, has been received by the client device and is market R (reference 510). Furthermore, for the sake of illustration, the sequence numbers of lost packets use bold characters.

Each time a packet is detected as being lost (step 402 of Figure 4), its distance from the previous lost packet is computed (step 406 of Figure 4). For example, when receiving the packet having sequence number 13, it is detected that packets having sequence numbers 11 and 12 have been lost. Then, the distance between the last lost packet (i.e. the packet having sequence number 8) and the first packet among the packets detected as lost (i.e. the packet having sequence number 11) is computed. This distance is equal to 3 (11-8=3) as illustrated with reference 512. The packet having the sequence number 11 is then considered as the last lost packet. Likewise, the distance between the last lost packet (i.e. the packet having sequence number 11) and the next packet among the packets detected as lost (i.e. the packet having sequence number 12) is computed. This distance is equal to 1 (12-11=1) as illustrated with reference 514. Similarly, distances 516 and 518 are computed.

As a consequence, the four distances $d_1 = 3$, $d_2 = 1$, $d_3 = 138$, and $d_4 = 4$ are stored to be used for computing a density of probabilities, referred to as PDF. This probability density represents, as a function of distance, the ratio of packets that have been lost at that distance from the last lost packet over the total number of recorded lost packets.. Such a density probability function may be evaluated, for example, according to a Kernel (K) interpolation method. Many kernel interpolations are possible. For the sake of illustration, the density of the uniform law over the interval [-1;+1]:

$$K(u) = \tfrac{1}{2} 1_{[-1,+1]}(u)$$ is chosen. This kernel is used in association with the set of distances $\{d_i\}_{i=1..n}$ where the number of distance n is equal to four. Therefore, the probability density may be evaluated according to the following mathematical formula,

$$\hat{f}_n(d) = \tfrac{1}{n} \sum_{i=1}^{n} \tfrac{1}{h_n} K\left(\tfrac{d-d_i}{h_n}\right)$$

wherein the value used for $h_n$ is $n^{\frac{1}{3}}$.

It leads to the density of probabilities as illustrated in Figure 6.

**Figure 6** illustrates a graphical representation of a probability density function that results from the computing step 414 of Figure 4.

The probability density function is here expressed as a function $y = pdf(x)$ wherein the horizontal axis (x), referenced 602, corresponds to the distance between a current lost packet and the last lost packet whereas the vertical axis (y), referenced 603, corresponds to the probability of loosing the current packet, i.e. the ratio between the number of lost packets that are at distance x from their last lost packet and the total number of lost packets.

The probability density is illustrated by the curve 600 where a peak, for example 601, indicates frequent packet losses occurring at some distances, close to each other, from their last lost packets.

**Figure 7** illustrates how the threshold d, referenced 418 in Figure 4, can be computed from the density of probabilities.

Let us consider a density of probabilities 700 that is similar to the density of probabilities 600 of figure 6 and expressed as $y = pdf(x)$. As mentioned above, the aim of threshold d, referenced 706 in the drawing, is to discriminate losses in a burst from isolated losses.

It is observed here that the distances between losses in bursts are lower than the distances between isolated losses. Furthermore, the density of probabilities of losses in a burst, in term of distance, is characterized by a peak with low distance values while isolated losses are usually characterized by a random value between consecutive losses and large distance values. Therefore, the density of probabilities is more flat in the case of isolated losses than for losses in a burst.

Based on this, the threshold d that makes it possible to distinguish losses in a burst from isolated losses can be computed using the algorithm depicted in **Figure 8** comprising the following steps:

- step 800: filtering the density of probabilities with a low frequency filter. It should be noted that such filtering may be optional because the Kernel method for constructing a density of probabilities leads to smooth functions;
- step 802: determining the first maximum of the function $y = pdf(x)$.
  This can be done by computing the derivative of $y = pdf(x)$ in x, from $x = 0$. The maximum is obtained for $x = x_1$ when the derivative is equal to zero ($pdf'(x_1) = 0$). It corresponds to reference 708 of Figure 7;
- step 804: determining the first minimum of the function $y = pdf(x)$.
  As for determining the first maximum, this can be done by computing the derivative of $y = pdf(x)$ in x, from $x = x_1$. The minimum is obtained for $x = x_2$, $x_2$ being greater than $x_1$, when the derivative is equal to zero ($pdf'(x_2) = 0$). It corresponds to reference 710 of Figure 7;
- step 806: determining the maximum of the absolute value of the derivative ($|pdf'(x)|$) in the interval $[x_1, x_2]$. The x value corresponding to this maximum is referred to as $x_{max}$, referenced 712 on Figure 7; and,
- step 808: computing the threshold d corresponding to the closest point of $x_2$ in the interval $[x_1, x_2]$ that

verifies $pdf'(d) = \frac{1}{h} pdf'(x_{max})$ wherein h may be, for example, equal to four. As mentioned above, threshold d is referenced 706 in Figure 7.

The density of probabilities drawn in this Figure assumes that burst type losses and isolated losses exist. However, if there are only burst type losses, the algorithm as depicted in Figure 8 still apply. In fact, the maximum $y = pdf(x_1)$ is still present because of the existence of the burst of losses, and the minimum $y=pdf(x_2)$ also exists as it may correspond to one distance at which no isolated packet loss had occur (y equals to zero then for $x = x_2$). It should be noted however that a total absence of isolated packet losses is unlikely as the distance between two consecutive burst periods is usually much higher than the distance between two consecutive losses in the same burst period, which makes the first packet lost in a new burst period being detected as an isolated packet loss.

If there are only isolated losses, the density of probabilities is quite flat. In such a case, $pdf(x_1) \approx pdf(x_2)$. Therefore, all the losses are considered as isolated losses. The existence of only isolated losses may be detected by testing if the maximum of $|pdf(x)|$ of all distances x is below a predetermined threshold. If the test is positive, only isolated packet losses are detected, otherwise, algorithm of figure 8 is executed for evaluating the threshold d.

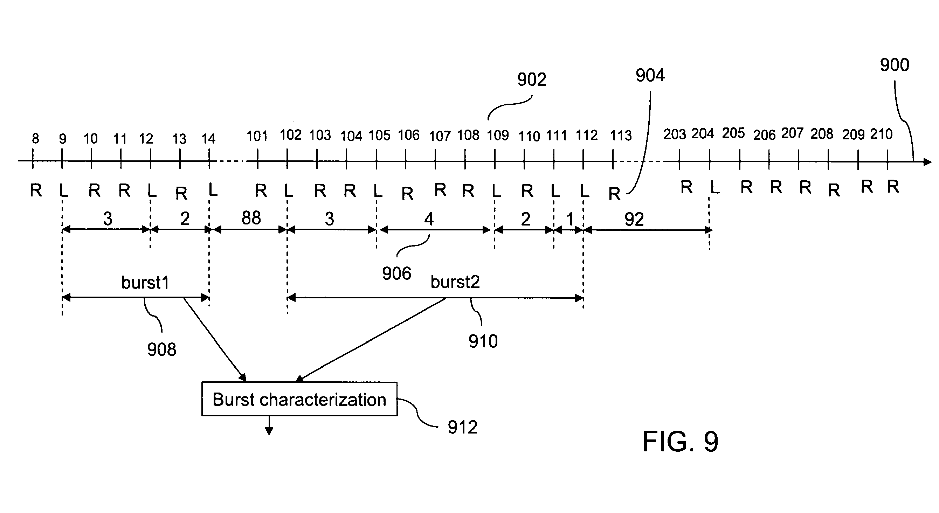

**Figure 9** illustrates how the algorithm described with reference to Figures 7 and 8 for computing threshold d differentiating losses in a burst from isolated losses can be used to improve data transfer over a communication network.

As described herein above, the sequence numbers of the received and lost packets are memorized. Such a sequence may be represented as shown in Figure 9 wherein reference 902 designates the sequence numbers of the transmitted packets along timeline 900. A status 904 is associated with each sequence number to indicate whether the corresponding packet has been received (R) or lost (L).

Based on the stored information, the module 244 of Figure 2 is used to characterize losses so as to improve FEC level adaptation efficiently. The FEC level or level of redundancy is defined as being the proportion of redundant packets, also referred to as FEC packets, relatively to number of data packets.

The characteristics that can be used for adapting the FEC level are the following ones:

- average distance between two consecutive burst periods;
- variance of the distances between two consecutive burst periods;
- mean loss rate of each burst period; and,
- loss rate of the isolated losses.

The knowledge of these values helps in predicting the characteristics of the next burst period and so in adapting the FEC level to the burst characteristics. As an example, if the burst period duration is only a few milliseconds, it is not worth sending a message to the server for requesting an increase of the FEC level. Indeed, this request will arrive too late and the FEC adaptation to burst period will be useless.

Therefore, if the distance between burst periods is very low, the value in matching the FEC level to the burst periods and isolated periods is limited. In such a case, the FEC level must preferably always be responsive to burst periods. On the contrary, if the distance between two burst periods is very high, it is useful to reduce the FEC level between these periods to enable a better video quality (the proportion of FEC packets being reduced, more bandwidth can be allocated to the video packets).

According to Figure 9, the distances between lost packets are calculated using the stored sequence numbers of the received and lost packets. For example, reference 906 designates the distance between the packets of which the sequence numbers are 105 and 109. This set of distances is used as explained with reference to Figures 7 and 8 for calculating a threshold d that makes it possible to differentiate losses in a burst from isolated losses. Once this threshold d has been calculated, the distances between consecutive lost packets are compared to the threshold d. This makes it possible to define burst periods that are the period formed by consecutive burst type losses (the first lost packet of the period being the last lost packet of the isolated type preceding the first lost packet of the burst type of the burst period). For the sake of illustration, after having computed a threshold d, it is possible to determine the two burst periods burst1 and burst2, referenced 908 and 910, respectively. Burst period burst1 is determined by lost packets having sequence numbers 9 and 14 since it is assumed that the lost packet having sequence number 12 is the first lost packet of the burst type and the packet having sequence number 102 is a lost packet of the isolated type. Likewise, burst period burst2 is determined by the last lost packet of the isolated type having sequence number 102 preceding the lost packet of burst type having sequence number 105 and ends with the last lost packet of the burst type of the sequence, i.e., the lost packet having sequence number 112 (that precedes the lost packet having sequence number 204).

As illustrated by reference 912, such information regarding burst periods is used to characterize the statistics of the losses in a burst such as the averaged loss rate associated with the burst periods, the burst period durations and the distances between burst periods. These characteristics are advantageously used in the loss detector algorithm part 410 of Figure 4 for evaluating the parameters of the FEC algorithms (e.g. redundancy level) that are transmitted to the server. Alternatively, these characteristics can be sent to the server wherein the parameters of the FEC algorithms are optimized accordingly.

Naturally, in order to satisfy local and specific requirements, a person skilled in the art may apply many modifications and alterations to the solution described above, all of which, however, are included within the scope of protection of the invention as defined by the following claims.

**Claims**

1. Method for determining types of packet loss in a communication network, the method being **characterized in that** it comprises the following steps,

   - detecting (402) loss of packets while transmitting a subset of packets of said plurality of packets;
   - for at least two consecutive lost packets of said subset of packets,

      ○ obtaining a distance between said two consecutive lost packets;
      o computing (416) a threshold (d) on the basis of a packet loss probability density function, wherein the packet loss probability density function describes a probability density in terms of distance between consecutive lost packets; and
      o determining a loss type of the last lost packet of said two consecutive lost packets, the loss of said last lost packet being of a first type if the obtained distance is greater than the computed threshold (424) and of a second type if said distance is lower than said threshold (422).

2. Method according to claim 1 further comprising a step of adapting a level of redundancy to be transmitted according to the loss type of said last lost packet.

3. Method according to claim 2 wherein losses of the first type represent isolated losses and losses of the second type represent burst losses, and wherein the method further comprising a step of determining at least one characteristic representing a burst period **characterized by** a set of contiguous packet losses of burst type, said level of redundancy being adapted according to at least said burst period.

4. Method according to any one of the preceding claims further comprising a step of determining (414) said packet loss probability density function, wherein said packet loss probability density function is based upon a kernel interpolation method.

5. Method according to any one of the preceding claims wherein the step of computing said threshold comprises the steps of :

- determining the first maximum $y_1 = pdf(x_1)$ of the curve $y = pdf(x)$ representing said packet loss probability density function (802);
- determining the first minimum $y_2 = pdf(x_2)$ of the curve $y = pdf(x)$ (804);
- determining the maximum of the absolute value of the derivative ($|pdf'(x)|$) in the interval $[x_1, x_2]$ (806); and
- computing the threshold as corresponding to the closest point of $x_2$ in the interval $[x_1, x_2]$ that verifies $pdf'(d) = \frac{1}{h} pdf'(x_{max})$ wherein $h$ is a predetermined parameter (808).

6. Method according to the preceding claim further comprising a step of filtering (800) said packet loss probability density function with a low frequency filter.

7. Method according to any one of claims 2 to 6 further comprising a step of transmitting a plurality of packets from a server to a client in the communication network including the adapted level of redundancy.

8. Method according to any one of previous claims, said step of detecting packet loss comprising a step of analyzing a sequence number associated with each received packet, said value being expressed in terms of sequence number difference.

9. Computer program comprising instructions for carrying out each step of the method according to any one of the preceding claims when the program is loaded and executed by a programmable apparatus.

10. An information storage means readable by a computer or a microprocessor storing instructions of a computer program, **characterized in that** it makes it possible to implement a method for determining types of packet loss according to any one of claims 1 to 8.

11. Device for determining types of packet loss in a communication network, the device being **characterized in that** it comprises the following means,

- means (240) for detecting loss of packets while transmitting a subset of packets of said plurality of packets;
- means (242) for obtaining a distance between two consecutive lost packets of said subset of packets;
- means for computing a threshold (d) on the basis of a packet loss probability density function, wherein the packet loss probability density function describes a probability density in terms of distance between consecutive lost packets;
- means for determining a loss type of the last lost packet of said two consecutive lost packets, the loss of said last lost packet being of a first type if the obtained distance is greater than the computed threshold and of a second type if said distance is lower than said threshold.

12. Device according to claim 11 further comprising means for adapting a level of redundancy to be transmitted according to the loss type of said last lost packet.

13. Device according to claim 12 wherein losses of the first type represent isolated losses and losses of the second type represent burst losses, and wherein the device further comprising means for determining at least one characteristic representing a burst period **characterized by** a set of contiguous packet losses of burst type, said level of redundancy being adapted according to at least said burst period.

14. Device according to any one of claims 11 to claim 13 further comprising means for determining said packet loss probability density function.

15. Device according to the preceding claim further comprising means for filtering said packet loss probability density function with a low frequency filter.

FIG. 1

FIG. 3

FIG. 2

EP 2 256 991 A1

400 — RTP reception

402 — Packet loss detection

404 — Sequence number

406 — Distance from last lost packet

420 — Distance < d ?

yes / no

412 — Distance storage

414 — Probability density function calculation

Threshold computation: distance between two consecutive lost packets

416

418 — d

422 — Congestion

424 — Isolated error

410

408

FIG. 4

FIG. 5

FIG. 6

EP 2 256 991 A1

FIG. 7

800 — Low frequency filtering

802 — Determining $x_1$ corresponding to the first maximum of pdf(x)

804 — Determining $x_2$ corresponding to the first minimum of pdf(x)

806 — Determining $x_{max}$ (maximum of the absolute value of the derivative of pdf(x) on interval $[x_1, x_2]$)

808 — Determining d (closest point of $x_2$ in interval $[x_1, x_2]$ that verifies pdf'(d)=1/h pdf'($x_{max}$))

# FIG. 8

FIG. 9

Europäisches
Patentamt

European
Patent Office

Office européen
des brevets

## EUROPEAN SEARCH REPORT

Application Number

EP 09 29 0381

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 434 388 A (LUCENT TECHNOLOGIES INC [US]) 30 June 2004 (2004-06-30) <br> * abstract * <br> * figure 1 * <br> * paragraph [0007] - paragraph [0011] * <br> * paragraph [0014] * <br> * paragraph [0018] * <br> * paragraph [0019] - paragraph [0025] * <br> * paragraph [0034] * <br> * paragraph [0040] - paragraph [0048] * <br> * paragraph [0068] * <br> ----- | 1-15 | INV. <br> H04L12/26 <br><br> ADD. <br> H04L1/18 |
| Y | GIROD B ET AL: "PACKET LOSS RESILIENT INTERNET VIDEO STREAMING" <br> PROCEEDINGS OF THE SPIE - THE INTERNATIONAL SOCIETY FOR OPTICAL ENGINEERING, SPIE, PO BOX 10 BELLINGHAM WA 98227-0010 USA, <br> vol. 3653, 1 January 1998 (1998-01-01), pages 833-844, XP000949894 <br> ISSN: 0277-786X <br> * 1. Introduction <br> * 2. Channel model for Internet video streaming <br> * 3.1. Calculation of the Residual Block Error Rate <br> * 4. Scalable video coding with unequal error protection <br> ----- | 1-15 | |
| A | WO 2004/012458 A (UNIV NANYANG [SG]; YANG XIAO KANG [SG]; YU RONG SHAN [SG]; ZHU CE [SG]) 5 February 2004 (2004-02-05) <br> * page 7, line 26 - line 31 * <br> * page 8, line 1 - line 3 * <br> * page 13, line 5 - line 31 * <br> * page 14, line 1 - line 26 * <br> * page 20, line 10 - line 14 * <br> * page 23, line 12 - line 16 * <br> ----- <br> -/-- | 1-15 | TECHNICAL FIELDS SEARCHED (IPC) <br><br> H04L |

The present search report has been drawn up for all claims

| Place of search | Date of completion of the search | Examiner |
|---|---|---|
| Munich | 18 August 2009 | Volpato, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 09 29 0381

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KANAL L N ET AL: "MODELS FOR CHANNELS WITH MEMORY AND THEIR APPLICATIONS TO ERROR CONTROL" PROCEEDINGS OF THE IEEE, IEEE. NEW YORK, US, vol. 66, no. 7, 1 July 1978 (1978-07-01), pages 724-744, XP000760432 ISSN: 0018-9219 * the whole document * ----- | 1-15 | |

TECHNICAL FIELDS
SEARCHED (IPC)

The present search report has been drawn up for all claims

| Place of search | Date of completion of the search | Examiner |
|---|---|---|
| Munich | 18 August 2009 | Volpato, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 29 0381

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2009

| Patent document cited in search report | | Publication date | Patent family member(s) | | Publication date |
|---|---|---|---|---|---|
| EP 1434388 | A | 30-06-2004 | NONE | | |
| WO 2004012458 | A | 05-02-2004 | AU | 2002324412 A1 | 16-02-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• End-to-end differentiation of congestion and wireless loss. *IEEE/ACM Transactions on Networking,* October 2003, vol. 11 (5), 703-717